# EUROPEAN PATENT APPLICATION

(11) **EP 4 299 509 A1**
(43) Date of publication of application: **03.01.2024**
(21) Application number: 22759835.6
(22) Date of filing: 25.02.2022
(51) Int. Cl.: C01B 13/02, C01B 3/02, C01B 3/06

(54) **HYDROGEN PRODUCTION DEVICE**

(30) Priority: 26.02.2021 JP 2021031257
(71) Applicant: Kyocera Corporation, Kyoto-shi Kyoto 612-8501 (JP)
(72) Inventor: ABE, Yuichi, Kyoto-shi, Kyoto 612-8501 (JP); OHKUMA, Takeshi, Kyoto-shi, Kyoto 612-8501 (JP)
(74) Representative: Viering, Jentschura & Partner mbB Patent- und Rechtsanwälte
(86) International application number: PCT/JP2022/008056
(87) International publication number: WO 2022/181801

(57) **Abstract**

A hydrogen production device includes a reaction medium, a container, a heating unit, a water vapor supply unit, and a cooling unit. The container accommodates the reaction medium. The heating unit heats the reaction medium. The water vapor supply unit supplies water vapor to the reaction medium. The cooling unit cools the reaction medium.

## Description

### TECHNICAL FIELD

The disclosed embodiments relate to a hydrogen production device.

### BACKGROUND OF INVENTION

For example, a technique in which a reaction medium is reduced by using heat released from an industrial furnace such as a blast furnace, and water vapor is brought into contact with the reduced reaction medium to generate hydrogen has been proposed (see, for example, Patent Document 1).

### CITATION LIST

### PATENT LITERATURE

Patent Document 1: WO 2013/141385

### SUMMARY

One aspect of an embodiment provides a hydrogen production device that can improve the generation efficiency of hydrogen.

### SOLUTION TO PROBLEM

A hydrogen production device according to an aspect of an embodiment includes a reaction medium, a container, a heating unit, a water vapor supply unit, and a cooling unit. The container accommodates the reaction medium. The heating unit heats the reaction medium. The water vapor supply unit supplies water vapor to the reaction medium. The cooling unit cools the reaction medium.

### BRIEF DESCRIPTION OF THE DRAWINGS

FIG. 1 is a diagram schematically illustrating a configuration of a hydrogen production device according to a first embodiment.
FIG. 2 is a diagram schematically illustrating a configuration of a hydrogen production device according to Variation 1 of the first embodiment.
FIG. 3 is a diagram schematically illustrating a configuration of a hydrogen production device according to Variation 2 of the first embodiment.
FIG. 4 is a diagram schematically illustrating a configuration of a hydrogen production device according to Variation 3 of the first embodiment.
FIG. 5 is a diagram schematically illustrating a configuration of a hydrogen production device according to a second embodiment.
FIG. 6 is a diagram schematically illustrating a configuration of a hydrogen production device according to Variation 1 of the second embodiment.
FIG. 7 is a diagram schematically illustrating a configuration of a hydrogen production device according to Variation 2 of the second embodiment.
FIG. 8 is a diagram schematically illustrating a configuration of a hydrogen production device according to Variation 3 of the second embodiment.
FIG. 9 is a diagram schematically illustrating a configuration and an operation of a hydrogen production device according to a third embodiment.
FIG. 10 is a diagram schematically illustrating a configuration and an operation of a hydrogen production device according to the third embodiment.
FIG. 11 is a diagram schematically illustrating a configuration of a hydrogen production device according to Variation 1 of the third embodiment.
FIG. 12 is a diagram schematically illustrating a configuration of a hydrogen production device according to Variation 2 of the third embodiment.
FIG. 13 is a diagram schematically illustrating a configuration of a hydrogen production device according to Variation 3 of the third embodiment.
FIG. 14 is a diagram schematically illustrating the configuration of the hydrogen production device according to Variation 3 of the third embodiment.
FIG. 15 is a diagram schematically illustrating a configuration of a hydrogen production device according to Variation 4 of the third embodiment.
FIG. 16 is a diagram schematically illustrating a configuration of the hydrogen production device according to Variation 4 of the third embodiment.
FIG. 17 is a diagram schematically illustrating a configuration of a movement mechanism according to Variation 5 of the third embodiment.

### DESCRIPTION OF EMBODIMENTS

Hereinafter, embodiments of a hydrogen production device disclosed in the present application will be described with reference to the accompanying drawings. Note that the present disclosure is not limited by the following embodiments. Note that the drawings are schematic and that the dimensional relationships between elements, the proportions thereof, and the like may differ from the actual ones. There may be differences between the drawings in terms of dimensional relationships, proportions, and the like.

For example, a technique in which a reaction medium is reduced by using heat released from an industrial furnace such as a blast furnace, and water vapor is brought into contact with the reduced reaction medium to generate hydrogen is proposed. In the process, the reaction medium is oxidized.

However, in the related art described above, it takes a long time to perform a process of lowering a temperature of the reaction medium from a temperature required for the reduction process to a temperature required for the generation of hydrogen, and thus it is difficult to shorten the processing cycle of the hydrogen production device. Thus, the related art described above needs to be improved in terms of efficiently generating hydrogen.

The realization of a technique that can overcome the aforementioned problem and improve the generation efficiency of hydrogen is expected.

### First Embodiment

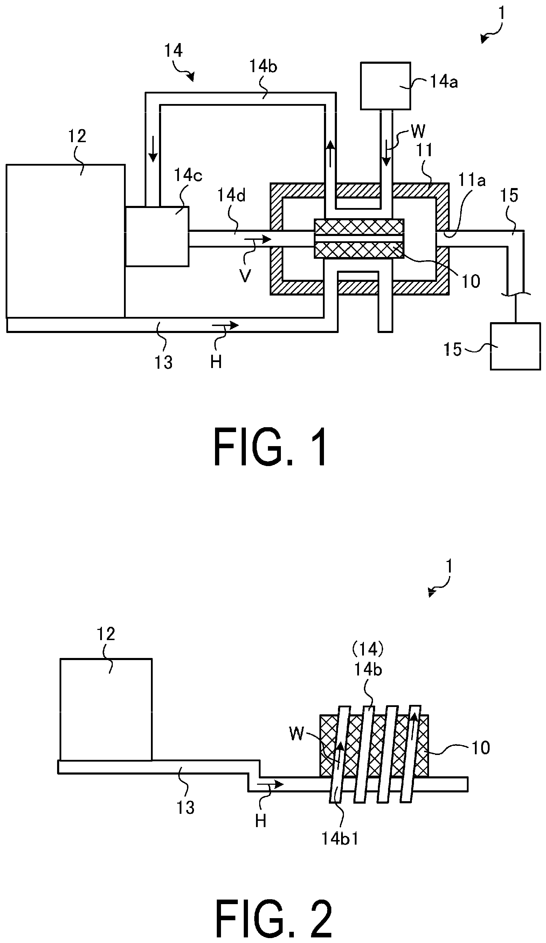

FIG. 1 is a diagram schematically illustrating a configuration of a hydrogen production device 1 according to a first embodiment. The hydrogen production device 1 according to the first embodiment includes a container 11, an industrial furnace 12, a heat transfer member 13, a water vapor supply unit 14, and a recovery mechanism 15. The industrial furnace 12 is an example of a heating unit.

The container 11 accommodates a reaction medium 10 to be used for the production of hydrogen. The reaction medium 10 is a porous body having a cylindrical shape and including a flow path through which various fluids can pass at the center. The material of the reaction medium 10 is, for example, an oxide that is reduced by heat to produce oxygen defects. As the material of the reaction medium 10, for example, a perovskite oxide can be used. When the perovskite oxide described in Patent Document 1 is used, the production cycle for hydrogen can be performed within a temperature range equal to or greater than 400°C and equal to or less than 1600°C. Note that the reaction medium 10 may also be referred to as a "catalyst".

The reaction medium 10 may be provided with various measuring instruments for managing a reaction state of the reaction medium 10. As the measuring instruments, for example, a displacement meter, a weight meter, an electrometer, or the like can be used. These measuring instruments may be used in combination as appropriate.

The displacement meter can measure expansion and contraction of the reaction medium 10 as an index indicating the reaction state of the reaction medium 10. The weight meter can measure an increase or decrease in the weight of the reaction medium 10. The electrometer can measure a change in the potential of an electrically conductive element attached to the reaction medium 10.

As the electrically conductive element, for example, a ceramic having oxygen defects such as titanium oxide or rare earth stabilized zirconium oxide can be used. Similar to the perovskite oxide, the amount of oxygen defects changes due to an oxidation-reduction reaction, and oxygen ion conduction changes according to the change, which enables the potential to be measured. Such an electrically conductive element has substantially the same thermal expansion coefficient as that of the perovskite oxide, because the electrically conductive element uses a ceramic that is the same as the perovskite oxide. Thus, cracks due to a difference in thermal expansion coefficient in a temperature cycle are less likely to occur. The reaction medium 10 may be provided with a temperature sensor capable of detecting the temperature of the reaction medium 10. The shape of the reaction medium 10 is not limited to the cylindrical shape, and may be, for example, a rectangular tubular shape.

The industrial furnace 12 is any of various furnaces that are used in various industries and that have a high internal temperature. Examples of the industrial furnace 12 include a firing furnace, a thermal treatment furnace, a power generation plant, a refuse incinerator, a blast furnace, an electric furnace, an industrial gas synthesis apparatus, a gasification apparatus, and a firing furnace for cement clinker.

The heat transfer member 13 transports heat H generated in the industrial furnace 12 into the container 11, and then, causes the reaction medium 10 to be reduced due to the heat H. The reduction of the reaction medium 10 is achieved, for example, by heating the reaction medium 10 to a temperature of about 800°C by means of the heat H transported from the industrial furnace 12. The temperature at which the reaction medium 10 is reduced may be higher than 800°C.

The heat transfer member 13 is, for example, a hollow member including both ends individually attached to the outer wall of the industrial furnace 12 and the reaction medium 10. The heat transfer member 13 may be, for example, a heat pipe that is a tubular body inside which a heat transfer medium is sealed. The heat transfer member 13 may be, for example, a hollow body including a flow path inside which a heat transfer medium can flow.

Examples of the heat transfer medium to be used for the heat transfer member 13 include sodium, water, and oil. For example, in the first embodiment, by using sodium as the heat transfer medium of the heat transfer member 13, the heat H can be efficiently transferred.

Note that when the heat transfer medium of the heat transfer member 13 is sodium, examples of the material of the tubular body to be used for the heat transfer member 13 include materials having high corrosion resistance such as inconel, beryllia, and boron nitride. When the heat transfer medium of the heat transfer member 13 is water or oil, examples of a material of the tubular body to be used for the heat transfer member 13 include ceramic and stainless steel.

The water vapor supply unit 14 supplies water vapor V into the container 11. The water vapor V to be supplied into the container 11 comes into contact with the reduced reaction medium 10 and then, is decomposed into oxygen and hydrogen. That is, when the reduced reaction medium 10 and the water vapor V come into contact with each other, oxygen contained in the water vapor V is taken into oxygen defects of the reaction medium 10, and hydrogen is generated.

The generation of hydrogen is achieved, for example, by bringing the reaction medium 10 into contact with the water vapor V after the temperature of the reduced reaction medium 10 is lowered to about 600°C.

The water vapor supply unit 14 includes a raw material water supply source 14a, a water supply pipe 14b, a water vapor generating unit 14c, and a water vapor supply pipe 14d. The water supply pipe 14b is an example of a cooling unit.

The raw material water supply source 14a is, for example, a tank that stores raw material water W serving as a raw material of the water vapor V. Note that the raw material water W stored in the raw material water supply source 14a may contain moisture removed when the recovery mechanism 15 recovers hydrogen and oxygen.

The water supply pipe 14b is a pipe connecting the raw material water supply source 14a and the water vapor generating unit 14c, and supplies the raw material water W supplied from the raw material water supply source 14a to the water vapor generating unit 14c.

The water vapor generating unit 14c generates the water vapor V from the raw material water W. The water vapor generating unit 14c is disposed adjacent to the industrial furnace 12, for example. Thus, in the first embodiment, the water vapor V can be generated by using the heat H generated from the industrial furnace 12.

Thus, according to the first embodiment, since energy to be required for generating the water vapor V can be decreased, the generation efficiency of hydrogen in the hydrogen production device 1 can be improved.

The water vapor supply pipe 14d is a pipe connecting the water vapor generating unit 14c and the container 11, and supplies the water vapor V generated by the water vapor generating unit 14c into the container 11.

The recovery mechanism 15 is connected to an opening 1 1a provided in the container 11 through a pipe 15a. The recovery mechanism 15 includes a plurality of recovery units that recover gas generated in the container 11 and gas remaining in the container 11.

For example, the recovery mechanism 15 includes a recovery unit that recovers hydrogen generated in the container 11, a recovery unit that recovers oxygen generated in the container 11, and a recovery unit that recovers an atmosphere such as moisture remaining in the container 11.

Note that various sensors for detecting the amount of gas generated in the container 11 and the like may be provided at the opening 11a of the container 11 to which the recovery mechanism 15 is connected. As the sensors, for example, an infrared type flow rate sensor, a differential thermal type flow rate sensor, a partial pressure sensor, or the like can be used.

The hydrogen production device 1 further includes a controller (not illustrated). The controller is, for example, a computer including a processor, a storage, an input device, a display device, and the like. The storage of the controller stores a control program for controlling various processes to be executed in the hydrogen production device 1 by the processor. The processor of the controller operates based on the control program to be stored in the storage and thereby controls the overall operation of the hydrogen production device 1.

Here, in the first embodiment, as illustrated in FIG. 1, the water supply pipe 14b is brought into contact with the reaction medium 10, and then is disposed. Accordingly, the raw material water W flowing through the water supply pipe 14b can quickly cool the reaction medium 10 when the temperature of the reaction medium 10 that has been subjected to the reduction process is lowered to a temperature required for an oxidation process.

Thus, in the first embodiment, the reaction medium 10 that has been subjected to the reduction process can be quickly shifted to the oxidation process, which can shorten the processing cycle of the hydrogen production device 1. As a result, according to the first embodiment, the generation efficiency of the hydrogen production device 1 can be improved.

In the first embodiment, since the raw material water W is heated when the reaction medium 10 is cooled, which makes it possible to reduce the energy required to generate the water vapor V by using the raw material water W. Thus, according to the first embodiment, the generation efficiency of hydrogen in the hydrogen production device 1 can be further improved.

In the first embodiment, the reaction medium 10 is heated by using the heat H generated in the industrial furnace 12. Thus, in the embodiment, hydrogen can be produced by using waste heat of the industrial furnace 12.

Subsequently, a producing method for producing hydrogen in the hydrogen production device 1 according to the first embodiment will be described. First, the controller transports the heat H to the reaction medium 10 through the heat transfer member 13. Accordingly, the reaction medium 10 is reduced, the reaction medium 10 releases oxygen, and oxygen defects are generated.

Note that during the reduction process for the reaction medium 10, the controller may stop supplying the raw material water W to the water vapor generating unit 14c. This can suppress the reaction medium 10 from being cooled by the raw material water W, thus enabling the reduction process to be effectively performed on the reaction medium 10.

Next, the controller operates the water vapor supply unit 14, and thereby, supplies the water vapor V to the reaction medium 10 that has been subjected to the reduction process. The water vapor V to be supplied into the container 11 is introduced into the flow path formed at the center of the reaction medium 10.

The water vapor V introduced into the flow path in the reaction medium 10 comes into contact with the reduced reaction medium 10, and is decomposed into oxygen and hydrogen. The decomposition of the water vapor V proceeds radially from the center toward the outer periphery of the reaction medium 10. As a result, oxygen contained in the water vapor V is taken into oxygen defects of the reaction medium 10, and hydrogen is generated.

Note that at this time, since the temperature of the reaction medium 10 is quickly lowered by the raw material water W flowing through the water supply pipe 14b, the reaction medium 10 that has been subjected to the reduction process can be quickly transferred to the oxidation process. During the oxidation process, the controller may continue the transport of the heat H from the industrial furnace 12 to the reaction medium 10, or may stop the transport of the heat H from the industrial furnace 12 to the reaction medium 10.

### Various Types of Variations of First Embodiment

Next, various types of variations of the hydrogen production device 1 according to the first embodiment will be described with reference to FIG. 2 to FIG. 4. Note that, in the following various types of variations, portions that are the same as those in the first embodiment will be denoted by the same reference signs, and redundant explanations may be omitted.

FIG. 2 is a diagram schematically illustrating a configuration of a hydrogen production device 1 according to Variation 1 of the first embodiment. As illustrated in FIG. 2, in Variation 1 of the first embodiment, the water supply pipe 14b is spirally wound around the reaction medium 10 having the cylindrical shape.

This enables a contact area between the reaction medium 10 and the water supply pipe 14b to be increased, which enables the reaction medium 10 to be efficiently cooled by using the water supply pipe 14b. Thus, according to Variation 1 of the first embodiment, the generation efficiency of hydrogen can be further improved in the hydrogen production device 1.

According to Variation 1, hydrogen can be smoothly released from a gap of the water supply pipe 14b spirally wound. Thus, hydrogen generated at the reaction medium 10 can be smoothly recovered.

In Variation 1, the heat transfer member 13 that transfers the heat H to the reaction medium 10 may be disposed between the water supply pipe 14b spirally wound and the reaction medium 10. This can more efficiently transfer the heat H from the heat transfer member 13 to the reaction medium 10.

That is, in Variation 1, the temperature of the reaction medium 10 that has been subjected to the oxidation process can be quickly increased to shift to the reduction process, which can further shorten the processing cycle of the hydrogen production device 1. Thus, according to Variation 1 of the first embodiment, the generation efficiency of hydrogen can be further improved in the hydrogen production device 1.

In Variation 1, an upstream portion 14b1 of the water supply pipe 14b may be disposed on the industrial furnace 12 side, of the heat transfer member 13. As described above, disposing the coolest raw material water W at a portion of the heat transfer member 13 where the temperature is the highest can decrease temperature unevenness that occurs when the reaction medium 10 is cooled in the water supply pipe 14b.

Thus, according to Variation 1 of the first embodiment, hydrogen can be stably generated from the reaction medium 10.

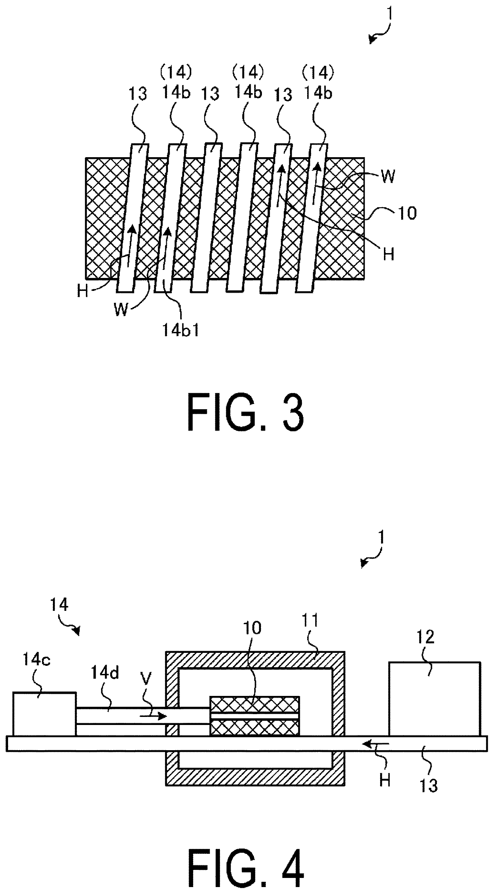

Note that the arrangement of the water supply pipe 14b and the heat transfer member 13 with respect to the reaction medium 10 is not limited to the example in FIG. 2. FIG. 3 is a diagram schematically illustrating a configuration of a hydrogen production device 1 according to Variation 2 of the first embodiment.

As illustrated in FIG. 3, in Variation 2 of the first embodiment, the heat transfer member 13 is spirally wound around the reaction medium 10 having a cylindrical shape. Thus, the heat transfer member 13 can more efficiently transfer the heat H from the heat transfer member 13 to the reaction medium 10.

That is, in Variation 2, the temperature of the reaction medium 10 that has been subjected to the oxidation process can be quickly increased to shift to the reduction process, which can further shorten the processing cycle of the hydrogen production device 1. Thus, according to Variation 2 of the first embodiment, the generation efficiency of hydrogen can be further improved in the hydrogen production device 1.

In Variation 2, as illustrated in FIG. 3, the water supply pipe 14b and the heat transfer member 13 may be alternately spirally wound around the reaction medium 10. This can make the temperature of the reaction medium 10 uniform in Variation 2. Thus, according to Variation 2 of the first embodiment, hydrogen can be stably generated from the reaction medium 10.

In Variation 2, the upstream portion 14b1 of the water supply pipe 14b may be disposed on the industrial furnace 12 side, of the heat transfer member 13. As described above, disposing the coolest raw material water W at a portion of the heat transfer member 13 where the temperature is the highest can decrease temperature unevenness that occurs when the reaction medium 10 is cooled in the water supply pipe 14b.

Thus, according to Variation 2 of the first embodiment, hydrogen can be stably generated from the reaction medium 10.

FIG. 4 is a diagram schematically illustrating a configuration of a hydrogen production device 1 according to Variation 3 of the first embodiment. As illustrated in FIG. 4, in Variation 3 of the first embodiment, the heat transfer member 13 is connected not only to the reaction medium 10 but also to the water vapor generating unit 14c of the water vapor supply unit 14.

That is, in Variation 3, the heat H generated in the industrial furnace 12 is supplied to the water vapor generating unit 14c of the water vapor supply unit 14 through the heat transfer member 13. This also allows the water vapor generating unit 14c to generate the water vapor V by using the heat H generated from the industrial furnace 12.

Thus, according to Variation 3 of the first embodiment, since energy to be required for generating the water vapor V can be reduced, the generation efficiency of hydrogen in the hydrogen production device 1 can be improved.

In Variation 3, as illustrated in FIG. 4, the heat transfer member 13 may be disposed substantially horizontally between the industrial furnace 12, the reaction medium 10, and the water vapor generating unit 14c. This causes the heat transfer medium inside the heat transfer member 13 to easily move. Thus, the heat transfer member 13 can efficiently transfer the heat H from the industrial furnace 12 to the reaction medium 10 and the water vapor generating unit 14c.

In Variation 3, the heat transfer member 13 may transfer the heat H to the reaction medium 10 and the water vapor generating unit 14c in this order. As a result, a larger amount of the heat H can be transferred to the reaction medium 10 requiring high temperature processing, thereby improving the system efficiency.

### Second Embodiment

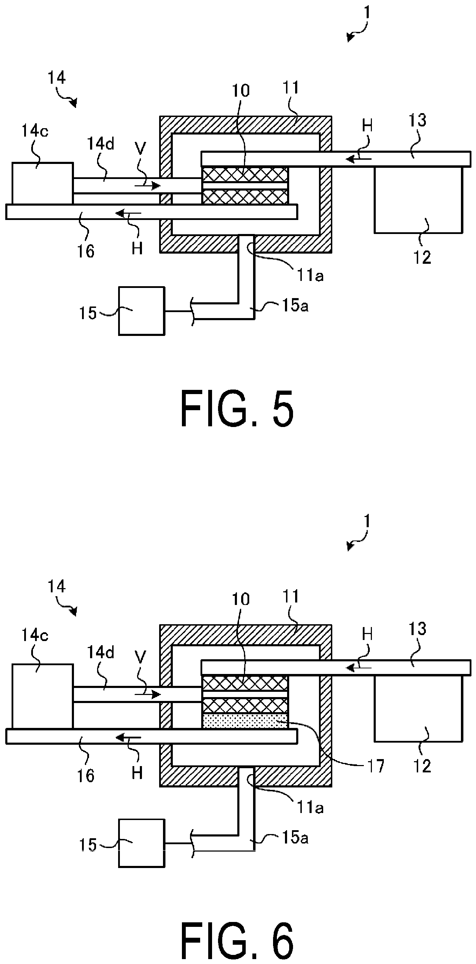

FIG. 5 is a diagram schematically illustrating a configuration of a hydrogen production device 1 according to a second embodiment. The hydrogen production device 1 according to the second embodiment includes the container 11, the industrial furnace 12, the heat transfer member 13, the water vapor supply unit 14, the recovery mechanism 15, and a different heat transfer member 16. The industrial furnace 12 is an example of the heating unit, and the different heat transfer member 16 is an example of the cooling unit.

The container 11 accommodates the reaction medium 10 to be used for the production of hydrogen. The reaction medium 10 is a porous body having a cylindrical shape and including a flow path through which various fluids can pass at the center. The material of the reaction medium 10 is, for example, an oxide that is reduced by heat to produce oxygen defects. As the material of the reaction medium 10, for example, a perovskite oxide can be used. When the perovskite oxide described in Patent Document 1 is used, the production cycle for hydrogen can be performed within a temperature range equal to or greater than 400°C and equal to or less than 1600°C.

The reaction medium 10 may be provided with various measuring instruments for managing a reaction state of the reaction medium 10. As the measuring instruments, for example, a displacement meter, a weight meter, an electrometer, or the like can be used. These measuring instruments may be used in combination as appropriate.

The displacement meter can measure expansion and contraction of the reaction medium 10 as an index indicating the reaction state of the reaction medium 10. The weight meter can measure an increase or decrease in the weight of the reaction medium 10. The electrometer can measure a change in the potential of an electrically conductive element attached to the reaction medium 10.

As the electrically conductive element, for example, a ceramic having oxygen defects such as titanium oxide or rare earth stabilized zirconium oxide can be used. Similar to the perovskite oxide, the amount of oxygen defects changes due to an oxidation-reduction reaction, and oxygen ion conduction changes according to the change, which enables the potential to be measured. Such an electrically conductive element has substantially the same thermal expansion coefficient as that of the perovskite oxide, because the electrically conductive element uses a ceramic that is the same as the perovskite oxide. Thus, cracks due to a difference in thermal expansion coefficient in a temperature cycle are less likely to occur. The reaction medium 10 may be provided with a temperature sensor capable of detecting the temperature of the reaction medium 10. The shape of the reaction medium 10 is not limited to the cylindrical shape, and may be, for example, a rectangular tubular shape.

The industrial furnace 12 is any of various furnaces that are used in various industries and that have a high internal temperature. Examples of the industrial furnace 12 include a firing furnace, a thermal treatment furnace, a power generation plant, a refuse incinerator, a blast furnace, an electric furnace, an industrial gas synthesis apparatus, a gasification apparatus, and a firing furnace for cement clinker.

The heat transfer member 13 transports the heat H generated in the industrial furnace 12 into the container 11, and then, causes the reaction medium 10 to be reduced due to the heat H. The reduction of the reaction medium 10 is achieved, for example, by heating the reaction medium 10 to a temperature of about 800°C by means of the heat H transported from the industrial furnace 12.

The heat transfer member 13 is, for example, a hollow member including both ends individually attached to the outer wall of the industrial furnace 12 and the reaction medium 10. The heat transfer member 13 may be, for example, a heat pipe that is a tubular body inside which a heat transfer medium is sealed. The heat transfer member 13 may be, for example, a hollow body including a flow path inside which a heat transfer medium can flow.

Examples of the heat transfer medium to be used for the heat transfer member 13 include sodium. As described above, using sodium for the heat transfer medium of the heat transfer member 13 causes the heat H to be efficiently transferred.

Note that when the heat transfer medium of the heat transfer member 13 is sodium, examples of the material of the tubular body to be used for the heat transfer member 13 include materials having high corrosion resistance such as inconel, beryllia, and boron nitride.

The water vapor supply unit 14 supplies the water vapor V into the container 11. The water vapor V to be supplied into the container 11 comes into contact with the reduced reaction medium 10 and then, is decomposed into oxygen and hydrogen. That is, when the reduced reaction medium 10 and the water vapor V come into contact with each other, oxygen contained in the water vapor V is taken into oxygen defects of the reaction medium 10, and hydrogen is generated.

The generation of hydrogen is achieved, for example, by bringing the reaction medium 10 into contact with the water vapor V after the temperature of the reduced reaction medium 10 is lowered to about 600°C.

The water vapor supply unit 14 includes the raw material water supply source 14a (see FIG. 1), the water supply pipe 14b (see FIG. 1), the water vapor generating unit 14c, and the water vapor supply pipe 14d.

The raw material water supply source 14a is, for example, a tank that stores the raw material water W (see FIG. 1) serving as a raw material of the water vapor V. Note that the raw material water W stored in the raw material water supply source 14a may contain moisture removed when the recovery mechanism 15 recovers hydrogen and oxygen.

The water supply pipe 14b is a pipe connecting the raw material water supply source 14a and the water vapor generating unit 14c, and supplies the raw material water W supplied from the raw material water supply source 14a to the water vapor generating unit 14c.

The water vapor generating unit 14c generates the water vapor V from the raw material water W. The water vapor supply pipe 14d is a pipe connecting the water vapor generating unit 14c and the container 11, and supplies the water vapor V generated by the water vapor generating unit 14c into the container 11.

The recovery mechanism 15 is connected to the opening 11a provided in the container 11 through the pipe 15a. The recovery mechanism 15 includes a plurality of recovery units that recover gas generated in the container 11 and gas remaining in the container 11.

For example, the recovery mechanism 15 includes a recovery unit that recovers hydrogen generated in the container 11, a recovery unit that recovers oxygen generated in the container 11, and a recovery unit that recovers an atmosphere such as moisture remaining in the container 11.

Note that various sensors for detecting the amount of gas generated in the container 11 and the like may be provided at the opening 11a of the container 11 to which the recovery mechanism 15 is connected. As the sensors, for example, an infrared type flow rate sensor, a differential thermal type flow rate sensor, a partial pressure sensor, or the like can be used.

The different heat transfer member 16 transfers the heat H transferred from the industrial furnace 12 to the reaction medium 10 to the water vapor generating unit 14c of the water vapor supply unit 14. The water vapor generating unit 14c generates the water vapor V due to the heat H transferred from the reaction medium 10.

The different heat transfer member 16 is, for example, a hollow member whose both ends are individually attached to the reaction medium 10 and the water vapor generating unit 14c. The different heat transfer member 16 may be, for example, a heat pipe that is a tubular body inside which a heat transfer medium is sealed. The different heat transfer member 16 may be, for example, a hollow body including a flow path inside which a heat transfer medium can flow.

Examples of the heat transfer medium to be used for the different heat transfer member 16 include water and oil. When the heat transfer medium of the different heat transfer member 16 is water or oil, examples of a material of the tubular body to be used for the different heat transfer member 16 include a ceramic, and stainless steel.

Here, in the second embodiment, the heat H is transferred from the reaction medium 10 to the water vapor generating unit 14c by using the different heat transfer member 16. That is, in the second embodiment, the different heat transfer member 16 transfers the heat H from the reaction medium 10 to the water vapor generating unit 14c. Thereby, the water vapor generating unit 14c generates the water vapor V, and the reaction medium 10 is rapidly cooled.

Due to this, in the second embodiment, the reaction medium 10 that has been subjected to the reduction process can be quickly shifted to the oxidation process, which can shorten the processing cycle of the hydrogen production device 1. Thus, according to the second embodiment, the generation efficiency of hydrogen in the hydrogen production device 1 can be improved.

In the second embodiment, by providing the different heat transfer member 16 that is a separate body from the heat transfer member 13, the different heat transfer member 16 can be made of a material different from that of the heat transfer member 13. Since the different heat transfer member 16 does not need to transport a large amount of the heat H compared with the heat transfer member 13, a material having lower heat resistance and lower cost than the heat transfer member 13 can be used for the different heat transfer member 16.

Thus, according to the second embodiment, the production cost of the hydrogen production device 1 can be decreased.

In the second embodiment, the different heat transfer member 16 is provided separately from the heat transfer member 13, which can suppress the transfer of the heat H transferred from the industrial furnace 12 through the heat transfer member 13, not to the reaction medium 10 but to the water vapor generating unit 14c. Thus, according to the second embodiment, the temperature of the reaction medium 10 can be efficiently increased by using the heat transfer member 13.

In the second embodiment, the heat transfer member 13 and the different heat transfer member 16 may be separated from each other with the reaction medium 10 interposed therebetween. Thus, the transfer of the heat H transferred from the industrial furnace 12 through the heat transfer member 13, not to the reaction medium 10 but to the water vapor generating unit 14c, can be further suppressed.

As a result, according to the second embodiment, the temperature of the reaction medium 10 can be further efficiently increased by using the heat transfer member 13.

### Various Types of Variations of Second Embodiment

Various types of variations of the hydrogen production device 1 according to the second embodiment will be described with reference to FIG. 6 to FIG. 8. Note that, in the following various types of variations, portions that are the same as those in the second embodiment will be denoted by the same reference signs, and redundant explanations may be omitted.

FIG. 6 is a diagram schematically illustrating a configuration of a hydrogen production device 1 according to Variation 1 of the second embodiment. As illustrated in FIG. 6, in Variation 1 of the second embodiment, the hydrogen production device 1 further includes a heat sink 17 that is located between the different heat transfer member 16 and the reaction medium 10 and that has a coefficient of thermal conductivity lower than that of the different heat transfer member 16.

Since this can suppress direct transfer of the heat H from the heat transfer member 13 to the different heat transfer member 16 through the reaction medium 10, a material having lower heat resistance and lower cost can be used for the different heat transfer member 16.

Thus, according to Variation 1 of the second embodiment, the production cost of the hydrogen production device 1 can be further decreased.

In Variation 1, the heat sink 17 having a coefficient of thermal conductivity lower than that of the different heat transfer member 16 is interposed between the reaction medium 10 and the different heat transfer member 16, which enables the transfer of the heat H from the reaction medium 10 to the different heat transfer member 16 to be adjusted. Examples of a material of the heat sink 17 include a ceramic and a metal.

In Variation 1, the heat sink 17 may be constituted by a porous body. This decreases the number of transmission paths of the heat H inside the heat sink 17, which enables the transfer of the heat H from the reaction medium 10 to the different heat transfer member 16 to be adjusted.

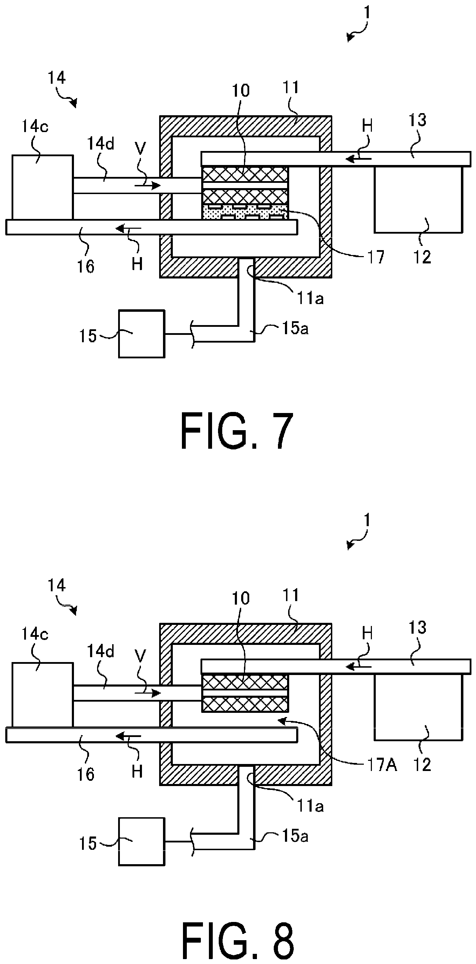

As illustrated in FIG. 7, the heat sink 17 may include a surface having unevenness. This also decreases the number of transmission paths of the heat H inside the heat sink 17, which enables the transfer of the heat H from the reaction medium 10 to the different heat transfer member 16 to be adjusted. FIG. 7 is a diagram schematically illustrating a configuration of a hydrogen production device 1 according to Variation 2 of the second embodiment.

As illustrated in FIG. 8, the reaction medium 10 and the different heat transfer member 16 may be separated from each other. That is, a space 17A having a coefficient of thermal conductivity lower than that of the different heat transfer member 16 may be disposed between the reaction medium 10 and the different heat transfer member 16. FIG. 8 is a diagram schematically illustrating a configuration of a hydrogen production device 1 according to Variation 3 of the second embodiment.

This also decreases the number of transmission paths of the heat H between the reaction medium 10 and the different heat transfer member 16 (for example, heat transmission or radiation in carrier gas), which enables the movement of the heat H from the reaction medium 10 to the different heat transfer member 16 to be adjusted.

Note that in the example in FIG. 8, the example in which the different heat transfer member 16 maintains a state separated from the reaction medium 10 has been described, but the present disclosure is not limited to this example.

For example, a movement mechanism (not illustrated) that moves the different heat transfer member 16 is separately provided in the hydrogen production device 1. The controller controls the movement mechanism to separate the reaction medium 10 and the different heat transfer member 16 from each other during the reduction process, and to bring the reaction medium 10 and the different heat transfer member 16 into contact with each other during the oxidation process.

Since the escape of the heat H to the different heat transfer member 16 can be suppressed during the reduction process, the temperature of the reaction medium 10 can be quickly increased, and the different heat transfer member 16 can quickly cool the reaction medium 10 during the oxidation process.

As a result, in this case, the generation efficiency of hydrogen in the hydrogen production device 1 can be further improved.

### Third Embodiment

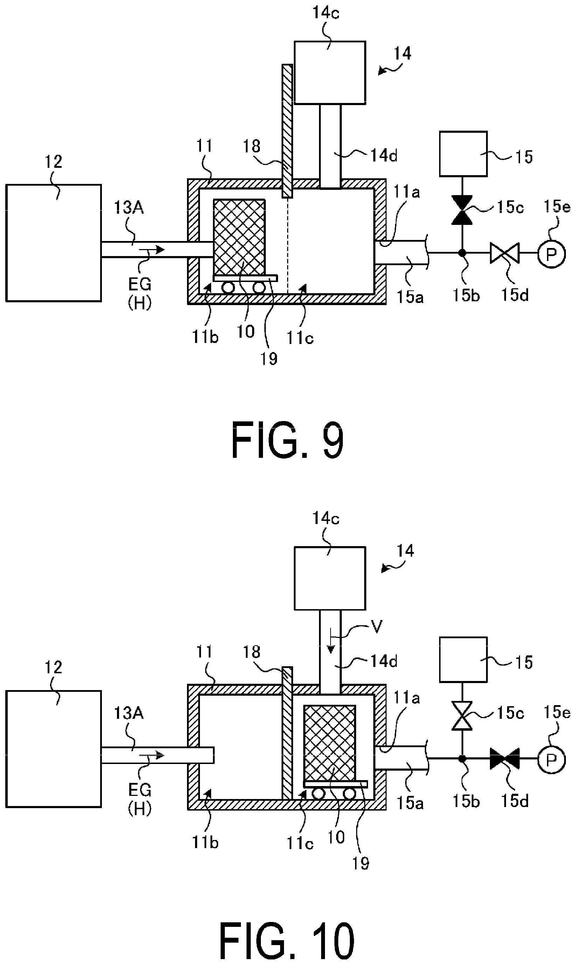

FIG. 9 and FIG. 10 are diagrams schematically illustrating a configuration and an operation of a hydrogen production device 1 according to a third embodiment. The hydrogen production device 1 according to the third embodiment includes the container 11, the industrial furnace 12, a transport pipe 13A, the water vapor supply unit 14, the recovery mechanism 15, a gate valve 18, and a movement mechanism 19. The industrial furnace 12 is an example of the heating unit, and the movement mechanism 19 is an example of the cooling unit.

The container 11 accommodates the reaction medium 10 to be used for the production of hydrogen. In the third embodiment, an inner portion of the container 11 includes a first region 11b and a second region 11c.

The reaction medium 10 is a porous body having a rectangular parallelepiped shape, and the porous body includes a flow path through which various fluids can pass. The material of the reaction medium 10 is, for example, an oxide that is reduced by heat to produce oxygen defects. As the material of the reaction medium 10, for example, a perovskite oxide can be used. When the perovskite oxide described in Patent Document 1 is used, the production cycle for hydrogen can be performed within a temperature range equal to or greater than 400°C and equal to or less than 1600°C.

The reaction medium 10 may be provided with various measuring instruments for managing a reaction state of the reaction medium 10. As the measuring instruments, for example, a displacement meter, a weight meter, an electrometer, or the like can be used. These measuring instruments may be used in combination as appropriate.

The displacement meter can measure expansion and contraction of the reaction medium 10 as an index indicating the reaction state of the reaction medium 10. The weight meter can measure an increase or decrease in the weight of the reaction medium 10. The electrometer can measure a change in the potential of an electrically conductive element attached to the reaction medium 10.

As the electrically conductive element, for example, a ceramic having oxygen defects such as titanium oxide or rare earth stabilized zirconium oxide can be used. Similar to the perovskite oxide, the amount of oxygen defects changes due to an oxidation-reduction reaction, and oxygen ion conduction changes according to the change, which enables the potential to be measured. Such an electrically conductive element has substantially the same thermal expansion coefficient as that of the perovskite oxide, because the electrically conductive element uses a ceramic that is the same as the perovskite oxide. Thus, cracks due to a difference in thermal expansion coefficient in a temperature cycle are less likely to occur. The reaction medium 10 may be provided with a temperature sensor capable of detecting the temperature of the reaction medium 10. The shape of the reaction medium 10 is not limited to the rectangular parallelepiped shape.

The industrial furnace 12 is any of various furnaces that are used in various industries and that have a high internal temperature. The industrial furnace 12 according to the third embodiment is, for example, a heating furnace, and generates heated exhaust gas EG based on various heating processes (for example, a firing process for a ceramic or the like) performed inside the industrial furnace 12. The heated exhaust gas EG is, for example, inert gas such as argon or nitrogen.

The transport pipe 13A is connected to the industrial furnace 12. An opening portion at the tip of the transport pipe 13A is located in the first region 11b in the container 11. The transport pipe 13A transports the exhaust gas EG generated in the industrial furnace 12 into the container 11, and then, reduces the reaction medium 10 by the heat H of the exhaust gas EG.

Note that a means for heating and reducing the reaction medium 10 is not limited to the exhaust gas EG. For example, the transport pipe 13A may be connected to the reaction medium 10 and the transport pipe 13A may function as a heat pipe. That is, the transport pipe 13A may transfer heat generated in the industrial furnace 12 to the reaction medium 10, and then, heat the reaction medium 10, thereby reducing the reaction medium 10.

The reduction of the reaction medium 10 is achieved, for example, by heating the reaction medium 10 to a temperature of approximately 800°C by means of the heat H of the exhaust gas EG. When the reaction medium 10 is reduced by the heat H of the exhaust gas EG generated in the industrial furnace 12, the number of oxygen defects generated in the reaction medium 10 can be increased as compared with the case where the reaction medium 10 is reduced by using the heat H released from the industrial furnace 12.

As the number of oxygen defects in the reaction medium 10 increases, the decomposition of the water vapor V based on the oxidation of the reaction medium 10 is promoted when the reaction medium 10 and the water vapor V come into contact with each other, which can improve the generation efficiency of hydrogen. Thus, the hydrogen production device 1 according to the third embodiment can produce hydrogen by effectively using the heat H of the exhaust gas EG generated in the industrial furnace 12.

The water vapor supply unit 14 supplies the water vapor V into the container 11. The water vapor V to be supplied into the container 11 comes into contact with the reduced reaction medium 10 and then, is decomposed into oxygen and hydrogen. That is, when the reduced reaction medium 10 and the water vapor V come into contact with each other, oxygen contained in the water vapor V is taken into oxygen defects of the reaction medium 10, and hydrogen is generated.

The generation of hydrogen is achieved, for example, by bringing the reaction medium 10 into contact with the water vapor V after the temperature of the reduced reaction medium 10 is lowered to about 600°C.

The water vapor supply unit 14 includes the raw material water supply source 14a (see FIG. 1), the water supply pipe 14b (see FIG. 1), the water vapor generating unit 14c, and the water vapor supply pipe 14d.

The raw material water supply source 14a is, for example, a tank that stores the raw material water W (see FIG. 1) serving as a raw material of the water vapor V. Note that the raw material water W stored in the raw material water supply source 14a may contain moisture removed when the recovery mechanism 15 recovers hydrogen and oxygen.

The water supply pipe 14b is a pipe connecting the raw material water supply source 14a and the water vapor generating unit 14c, and supplies the raw material water W supplied from the raw material water supply source 14a to the water vapor generating unit 14c.

The water vapor generating unit 14c generates the water vapor V from the raw material water W. The water vapor supply pipe 14d is a pipe connecting the water vapor generating unit 14c and the container 11, and supplies the water vapor V generated by the water vapor generating unit 14c to the second region 11c in the container 11.

The recovery mechanism 15 is connected to the opening 11a provided in the second region 11c in the container 11 through the pipe 15a, a branch portion 15b, and a valve 15c. The recovery mechanism 15 includes a plurality of recovery units that recover gas generated in the container 11 and gas remaining in the container 11.

For example, the recovery mechanism 15 includes a recovery unit that recovers hydrogen generated in the container 11, a recovery unit that recovers oxygen generated in the container 11, and a recovery unit that recovers the exhaust gas EG and moisture that remain in the container 11. For example, the recovered exhaust gas EG may be reused as cooling gas for cooling the reaction medium 10 by moving in the container 11 through a pipe or the like without directly contacting the reaction medium 10.

Note that various sensors for detecting the amount of gas generated in the container 11 and the like may be provided at the opening 11a of the container 11 to which the recovery mechanism 15 is connected. As the sensors, for example, an infrared type flow rate sensor, a differential thermal type flow rate sensor, a partial pressure sensor, or the like can be used.

A pump 15e is connected to the branch portion 15b with a valve 15d interposed therebetween. The pump 15e can depressurize the inner portion of the container 11 when the valve 15d is in an open state.

The gate valve 18 is disposed between the first region 11b and the second region 11c in the container 11, and opens and closes between the first region 11b and the second region 11c.

The movement mechanism 19 moves the reaction medium 10 between the first region 11b and the second region 11c inside the container 11. The movement mechanism 19 is, for example, a cart including a drive unit, and the reaction medium 10 is placed on the cart.

The hydrogen production device 1 further includes a controller (not illustrated). The controller is, for example, a computer including a processor, a storage, an input device, a display device, and the like. The storage of the controller stores a control program for controlling various processes to be executed in the hydrogen production device 1 by the processor. The processor of the controller operates based on the control program stored in the storage and thereby controls the overall operation of the hydrogen production device 1.

In the third embodiment described above, the controller performs the reduction process on the reaction medium 10 in the state illustrated in FIG. 9. To be specific, the controller controls the movement mechanism 19 to position the reaction medium 10 in the first region 11b inside the container 11, and controls the gate valve 18 to be in an open state. The controller controls the valve 15c to be in a closed state, and controls the valve 15d to be in an open state.

Thus, the temperature of the reaction medium 10 located in the first region 11b is increased by the heat H of the exhaust gas EG supplied to the first region 11b, and the reaction medium 10 is reduced. The pump 15e discharges oxygen released from the reaction medium 10 during the reduction process from the inside of the container 11.

Note that during the reduction process for the reaction medium 10, the controller stops the supply of the water vapor V (see FIG. 10) from the water vapor supply unit 14.

Next, as illustrated in FIG. 10, the controller operates the movement mechanism 19, moves the reaction medium 10 that has been subjected to the reduction process from the first region 11b to the second region 11c, and changes a state of the gate valve 18 from the open state to the closed state. That is, at this time, the reaction medium 10 is accommodated in the second region 11c. The second region 11c is isolated from the first region 11b.

Then, the controller operates the water vapor supply unit 14, and then, supplies the water vapor V to the second region 11c. The controller changes a state of the valve 15c from the closed state to the open state, and changes a state of the valve 15d from the open state to the closed state.

The water vapor V introduced into the flow path in the reaction medium 10 comes into contact with the reduced reaction medium 10, and is decomposed into oxygen and hydrogen. The decomposition of the water vapor V proceeds radially from the inside toward the outer periphery of the reaction medium 10. Thus, oxygen contained in the water vapor V is taken into oxygen defects of the reaction medium 10, and hydrogen is generated. The recovery mechanism 15 recovers hydrogen generated at the reaction medium 10.

Note that during the oxidation process, the controller may continue the supply of the exhaust gas EG from the industrial furnace 12 to the first region 11b, or may stop the supply of the exhaust gas EG from the industrial furnace 12 to the reaction medium 10.

When the oxidation process for the reaction medium 10 is completed, the controller returns the state of the hydrogen production device 1 to the state illustrated in FIG. 9, and performs the reduction process on the reaction medium 10 again. That is, in the third embodiment, each unit and each portion of the hydrogen production device 1 are controlled in a manner that the state illustrated in FIG. 9 and the state illustrated in FIG. 10 are alternately repeated.

In the third embodiment, as illustrated in FIG. 10, during the oxidation process for the reaction medium 10, the movement mechanism 19 is caused to operate, and the reaction medium 10 is moved away from the first region 11b to which the transport pipe 13A is connected. Thus, since the reaction medium 10 is separated from the heat source, the reaction medium 10 can be quickly cooled when the temperature of the reaction medium 10 that has been subjected to the reduction process is lowered to the temperature required for the oxidation process.

Accordingly, in the third embodiment, the reaction medium 10 that has been subjected to the reduction process can be quickly shifted to the oxidation process, which can shorten the processing cycle of the hydrogen production device 1. Thus, according to the third embodiment, the generation efficiency of hydrogen in the hydrogen production device 1 can be improved.

In the third embodiment, the movement mechanism 19 may move the reaction medium 10 between the first region 11b to which the exhaust gas EG is supplied and the second region 11c to which the water vapor V is supplied. Accordingly, during the oxidation process for the reaction medium 10, the reaction medium 10 can be separated from the heat source, and the water vapor V can be directly supplied from the water vapor supply unit 14 to the reaction medium 10.

Thus, according to the third embodiment, the generation efficiency of hydrogen in the hydrogen production device 1 can be further improved.

In the third embodiment, the gate valve 18 may be provided between the first region 11b and the second region 11c in the container 11. This makes it possible to further suppress the supply of the heat H by using the exhaust gas EG to the reaction medium 10 during the oxidation process for the reaction medium 10.

Thus, according to the third embodiment, since the processing cycle of the hydrogen production device 1 can be further shortened, the generation efficiency of hydrogen in the hydrogen production device 1 can be further improved.

In the third embodiment, the inner portion of the container 11 may be depressurized by using the pump 15e during the reduction process illustrated in FIG. 9. As a result, the oxygen concentration inside the container 11 can be decreased during the reduction process, which can promote the release of oxygen from the reaction medium 10.

### Various Types of Variations of Third Embodiment

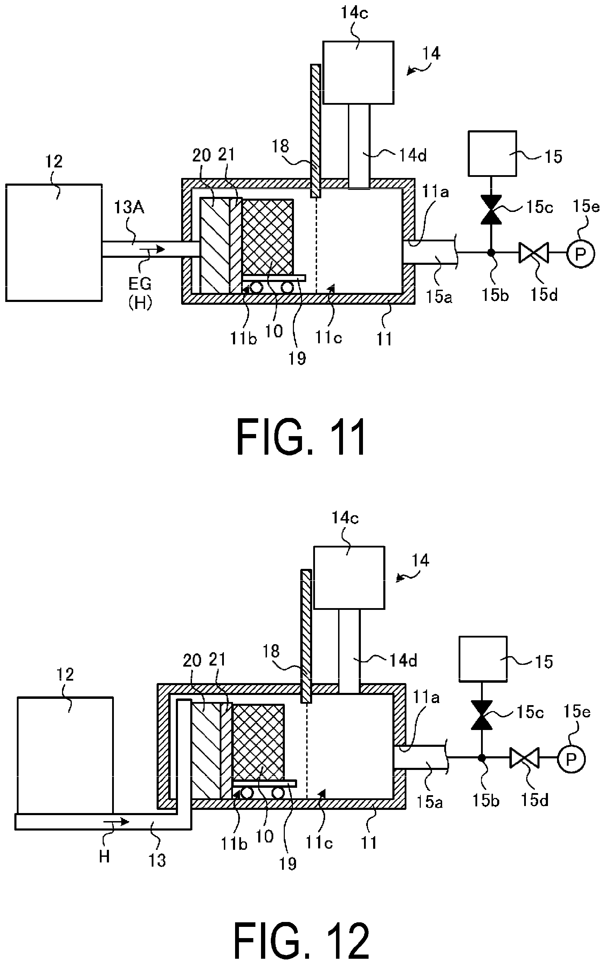

Next, various types of variations of the hydrogen production device 1 according to the third embodiment will be described with reference to FIG. 11 to FIG. 17. Note that, in the following various types of variations, portions that are the same as those in the third embodiment will be denoted by the same reference signs, and redundant explanations may be omitted.

FIG. 11 is a diagram schematically illustrating a configuration of a hydrogen production device 1 according to Variation 1 of the third embodiment. As illustrated in FIG. 11, in Variation 1 of the third embodiment, the hydrogen production device 1 further includes a heat storage member 20 and a heat transfer member 21 that are located in the first region 11b in the container 11.

The heat storage member 20 is made of a material having a high heat capacity and is disposed close to the transport pipe 13A in the first region 11b. The heat storage member 20 stores the heat H of the exhaust gas EG supplied from the industrial furnace 12.

The heat storage member 20 may be, for example, a sensible heat storage material using a ceramic, a mineral, concrete, or the like. The heat storage member 20 may be, for example, a latent heat storage material using a chloride, a metal, an alloy, or the like.

The heat transfer member 21 is disposed in contact with the heat storage member 20 in the first region 11b, and is disposed in a manner that the heat transfer member 21 is brought into contact with the reaction medium 10 when the reaction medium 10 moves to the first region 11b. When the reaction medium 10 moves to the first region 11b, the heat transfer member 21 transfers the heat H stored in the heat storage member 20 to the reaction medium 10.

The heat transfer member 21 may be, for example, a heat pipe inside which a heat transfer medium is sealed. The heat transfer member 21 may be, for example, a heat spreader including a flow path inside which a heat transfer medium can flow.

Examples of the heat transfer medium to be used for the heat transfer member 21 include sodium, water, and oil. For example, in Variation 1, using sodium as the heat transfer medium of the heat transfer member 21 can efficiently transfer the heat H.

Note that when the heat transfer medium of the heat transfer member 21 is sodium, examples of the material to be used for the heat transfer member 21 include materials having high corrosion resistance such as inconel, beryllia, and boron nitride. When the heat transfer medium of the heat transfer member 21 is water or oil, examples of the material to be used for the heat transfer member 21 include a ceramic and stainless steel.

With the configuration according to Variation 1 of the third embodiment, the heat H having a high temperature can be constantly supplied to the reaction medium 10 located in the first region 11b. Accordingly, the reaction medium 10 that has been subjected to the oxidation process can be quickly shifted to the reduction process, which can further shorten the processing cycle of the hydrogen production device 1.

Thus, according to Variation 1 of the third embodiment, the generation efficiency of hydrogen in the hydrogen production device 1 can be further improved.

In Variation 1, the heat stored in the heat storage member 20 is indirectly transferred to the reaction medium 10 through the heat transfer member 21, which can decrease heat shock generated in the reaction medium 10. As a result, according to Variation 1 of the third embodiment, since damage of the reaction medium 10 can be suppressed, hydrogen can be stably produced in the hydrogen production device 1.

FIG. 12 is a diagram schematically illustrating a configuration of a hydrogen production device 1 according to Variation 2 of the third embodiment. As illustrated in FIG. 12, Variation 2 of the third embodiment differs from Variation 1 described above in that the hydrogen production device 1 transfers the heat H to the heat storage member 20 through the heat transfer member 13 instead of through the transport pipe 13A.

The heat transfer member 13 transfers the heat H generated in the industrial furnace 12 to the heat storage member 20 in the container 11, and then the reaction medium 10 is reduced by the heat H. The reduction of the reaction medium 10 is achieved, for example, by heating the reaction medium 10 to a temperature of about 800°C by means of the heat H transported from the industrial furnace 12.

The heat transfer member 13 is, for example, a hollow member including both ends individually attached to the outer wall of the industrial furnace 12 and the heat storage member 20. The heat transfer member 13 may be, for example, a heat pipe that is a tubular body inside which a heat transfer medium is sealed. The heat transfer member 13 may be, for example, a hollow body including a flow path inside which a heat transfer medium can flow.

Examples of the heat transfer medium to be used for the heat transfer member 13 include sodium, water, and oil. For example, in Variation 2, using sodium as the heat transfer medium of the heat transfer member 13 can cause the effective transfer of the heat H.

Note that when the heat transfer medium of the heat transfer member 13 is sodium, examples of the material of the tubular body to be used for the heat transfer member 13 include materials having high corrosion resistance such as inconel, beryllia, and boron nitride. When the heat transfer medium of the heat transfer member 13 is water or oil, examples of a material of the tubular body to be used for the heat transfer member 13 include ceramic and stainless steel.

In Variation 2 of the third embodiment, such a configuration enables the heat H having a high temperature to be constantly supplied to the reaction medium 10 located in the first region 11b. Accordingly, the reaction medium 10 that has been subjected to the oxidation process can be quickly shifted to the reduction process, which can further shorten the processing cycle of the hydrogen production device 1.

Thus, according to Variation 2 of the third embodiment, the generation efficiency of hydrogen in the hydrogen production device 1 can be further improved.

In Variation 2, the heat stored in the heat storage member 20 is indirectly transferred to the reaction medium 10 through the heat transfer member 21, which can decrease heat shock generated in the reaction medium 10. As a result, according to Variation 2 of the third embodiment, damage to the reaction medium 10 can be suppressed, which makes it possible to stably produce hydrogen in the hydrogen production device 1.

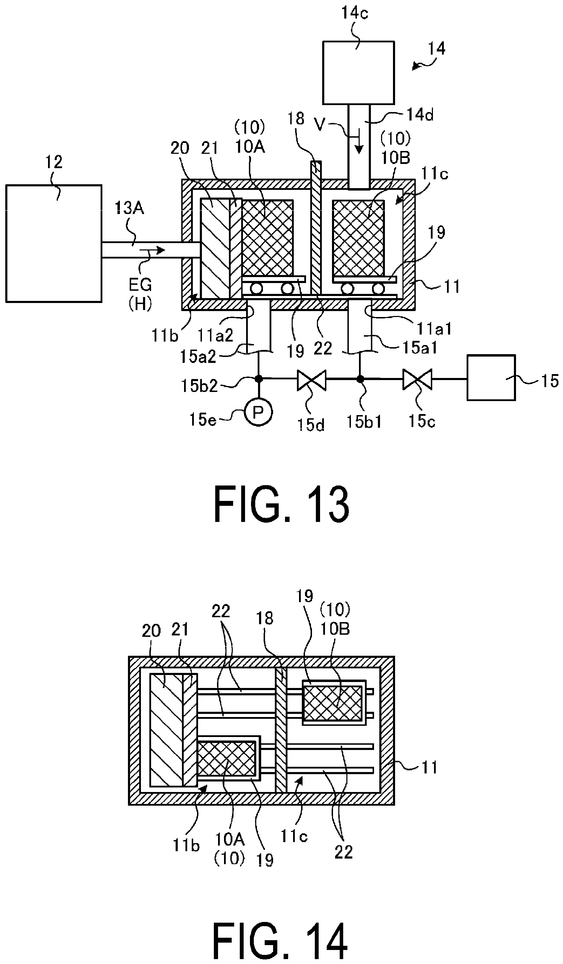

FIG. 13 and FIG. 14 are diagrams schematically illustrating a configuration of a hydrogen production device 1 according to Variation 3 of the third embodiment. Note that

FIG. 14 is a diagram of the container 11 and the inner portion thereof according to Variation 3 in a top view.

As illustrated in FIG. 13 and FIG. 14, in Variation 3, a plurality of (two in the drawings) reaction media 10 (hereinafter also referred to as reaction media 10A and 10B) are disposed inside the container 11. In Variation 3, the movement mechanism 19 alternately moves the plurality of reaction media 10 between the first region 11b and the second region 11c.

For example, as illustrated in FIG. 13 and the like, the controller supplies the heat H to the reaction medium 10A located in the first region 11b and performs the reduction process on the reaction medium 10A, and supplies the water vapor V to the reaction medium 10B located in the second region 11c and performs the oxidation process on the reaction medium 10B.

Thereby, the reduction process and the oxidation process can be performed on the plurality of reaction media 10 in parallel in the hydrogen production device 1, which can further shorten the processing cycle of the hydrogen production device 1. Thus, according to Variation 3 of the third embodiment, the generation efficiency of hydrogen in the hydrogen production device 1 can be further improved.

In Variation 3, the gate valve 18 may be closed when the reduction process and the oxidation process are performed on the plurality of reaction media 10 in parallel. Accordingly, the leakage of the oxygen gas generated from the reaction medium 10 located in the first region 11b into the second region 11c can be suppressed.

That is, in Variation 3, the fact that the oxygen gas generated from the reaction medium 10 located in the first region 11b blocks the oxidation process by the water vapor V in the second region 11c can be suppressed. Consequently, according to Variation 3 of the third embodiment, the hydrogen production device 1 can stably produce hydrogen.

Note that the pump 15e connected to an opening 11a2 provided in the first region 11b in the container 11 through a pipe 15a2 and a confluence portion 15b2 discharges the oxygen gas generated from the reaction medium 10 located in the first region 11b.

The recovery mechanism 15 is connected to an opening 11a1 provided in the second region 11c in the container 11 through a pipe 15a1, a branch portion 15b1, and the valve 15c. The branch portion 15b1 and the confluence portion 15b2 are connected with the valve 15d interposed therebetween.

Then, after the reduction process and the oxidation process for the plurality of reaction media 10 are completed in the first region 11b and the second region 11c and the positions of the plurality of reaction media 10 are switched, the controller closes the gate valve 18 and opens the valve 15d.

Accordingly, the controller depressurizes the first region 11b and the second region 11c. At this time, the state of the valve 15c is controlled to be in the closed state.

Next, when the pressures in the first region 11b and the second region 11c decrease to predetermined pressures, the controller changes the valve 15d to the closed state, changes the valve 15c to the open state, and supplies the water vapor V from the water vapor supply unit 14 to the second region 11c. Thus, the controller causes the recovery mechanism 15 to recover hydrogen generated in the second region 11c.

At this time, the pump 15e continues the depressurization process to the first region 11b. This makes it possible to decrease the concentration of oxygen in the first region 11b during the reduction process, thereby promoting the release of oxygen from the reaction medium 10.

In Variation 3, as illustrated in FIG. 13 and FIG. 14, the movement mechanism 19 that is a cart may be disposed on a rail 22. This can suppress overturning of the reaction medium 10, when the reaction medium 10 moves inside the container 11. Consequently, according to Variation 3 of the third embodiment, the hydrogen production device 1 can stably produce hydrogen.

Note that in the third embodiment and Variations 1 and 2 described above, the movement mechanism 19 that is a cart may be disposed on the rail 22 as in or similarly to Variation 3.

In Variation 3, the water vapor supply unit 14 may be provided directly above the rail 22 provided for each of the reaction media 10 in the second region 11c. As a result, the water vapor V can be efficiently supplied to all the reaction medium 10.

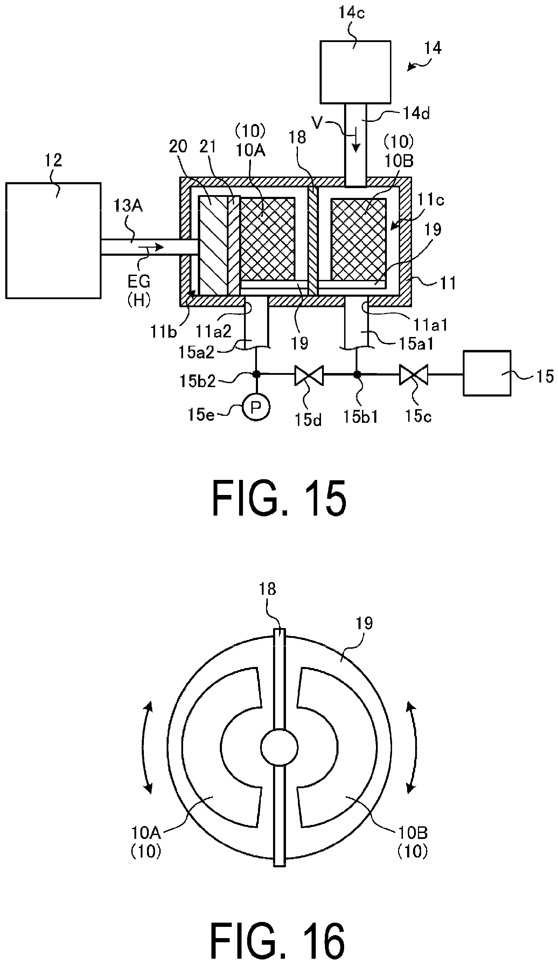

FIG. 15 and FIG. 16 are diagrams schematically illustrating a configuration of a hydrogen production device 1 according to Variation 4 of the third embodiment. Note that

FIG. 16 is a diagram of the movement mechanism 19 according to Variation 4 in a top view. In Variation 4, the configuration of the movement mechanism 19 is different from that of Variation 3 described above.

Specifically, as illustrated in FIG. 16, the movement mechanism 19 is a rotating member that rotates horizontally inside the container 11. A plurality of (two in the drawing) reaction media 10 each of which has a fan shape are placed on a front surface of the rotating member. Between the plurality of reaction media 10 placed on the front surface of the rotating member, the gate valve 18 formed integrally with the rotating member is disposed.

In Variation 4, the controller rotates the movement mechanism 19 that is the rotating member, and causes the plurality of reaction media 10 to alternately move between the first region 11b and the second region 11c.

For example, as illustrated in FIG. 15, the controller supplies the heat H to a reaction medium 10A positioned in the first region 11b, and performs the reduction process on the reaction medium 10A, and supplies the water vapor V to a reaction medium 10B located in the second region 11c, and performs the oxidation process on the reaction medium 10B.

Thereby, the reduction process and the oxidation process can be performed on the plurality of reaction media 10 in parallel in the hydrogen production device 1, which can further shorten the processing cycle of the hydrogen production device 1. Thus, according to Variation 4 of the third embodiment, the generation efficiency of hydrogen in the hydrogen production device 1 can be further improved.

In Variation 4, as illustrated in FIG. 16, the reaction medium 10 having the fan shape may be disposed along a rotating member having a disc shape. Accordingly, the reaction medium 10 having a larger volume than that of the reaction medium 10 having the rectangular parallelepiped shape can be disposed on the rotating member having the disc shape, and thus, the generation efficiency of hydrogen in the hydrogen production device 1 can be further improved.

In Variation 4, a flow path having a fan shape may be formed inside the reaction medium 10 having the fan shape. Thus, the water vapor V can be uniformly supplied inside the reaction medium 10.

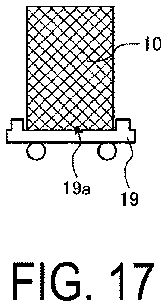

FIG. 17 is a diagram schematically illustrating a configuration of the movement mechanism 19 according to Variation 5 of the third embodiment. As illustrated in FIG. 17, in Variation 5, a placement portion of the movement mechanism 19 that is a cart includes a recessed portion 19a. Then, the reaction medium 10 is placed in an inserted manner into the recessed portion 19a.

This can suppress overturning of the reaction medium 10, when the reaction medium 10 moves inside the container 11. Consequently, according to Variation 5 of the third embodiment, the hydrogen production device 1 can stably produce hydrogen.

In Variation 5, the placement portion of the movement mechanism 19 that is a cart may be constituted by a porous body. Accordingly, the hydrogen gas can be recovered also from the surface of the reaction medium 10 in contact with the placement portion of the movement mechanism 19. As a result, according to Variation 5 of the third embodiment, the generation efficiency of hydrogen in the hydrogen production device 1 can be further improved.

Although the embodiments of the present disclosure have been described above, the present disclosure is not limited to the embodiments described above, and various changes can be made without departing from the spirit of the present disclosure. For example, although the example in which the industrial furnace 12 is used as the heating unit that heats the reaction medium 10 in each of the above-described embodiments has been described, the heat source to be used as the heating unit is not limited to the industrial furnace 12, and various heat sources such as sunlight can be used.

A thermal insulation material may be provided around the transport pipe 13A, the water supply pipe 14b, and the different heat transfer member 16. With such a configuration, heat dissipation is decreased and efficiency can be improved. Such a thermal insulation material is, for example, a brick, glass wool, a ceramic fiber, rock wool, or the like, and an inorganic adhesive or the like may be used for bonding.

Note that the embodiments disclosed herein are exemplary in all respects and not restrictive. The aforementioned embodiments can be embodied in a variety of forms. The aforementioned embodiments may be omitted, replaced, or changed in various forms without departing from the scope of the appended claims and the purpose thereof.

Note that the present technique can also have the following configurations.
(1) A hydrogen production device including
   a reaction medium,
   a container configured to accommodate the reaction medium,
   a heating unit configured to heat the reaction medium,
   a water vapor supply unit configured to supply water vapor to the reaction medium, and
   a cooling unit configured to cool the reaction medium.
(2) The hydrogen production device according to (1) described above,
   wherein the cooling unit is a water supply pipe configured to supply raw material water to the water vapor supply unit, and
   the water supply pipe is disposed in contact with the reaction medium.
(3) The hydrogen production device according to (2) described above,
   wherein the water supply pipe is spirally wound around the reaction medium.
(4) The hydrogen production device according to (3) described above, further including
   a heat transfer member configured to transfer heat generated in the heating unit to the reaction medium,
   wherein the heat transfer member is disposed between the water supply pipe spirally wound and the reaction medium.
(5) The hydrogen production device according to (3) described above, further including
   a heat transfer member configured to transfer heat generated in the heating unit to the reaction medium,
   wherein the heat transfer member is spirally wound around the reaction medium.
(6) The hydrogen production device according to (5) described above,
   wherein the water supply pipe and the heat transfer member are alternately spirally wound around the reaction medium.
(7) The hydrogen production device according to any one of (4) to (6) described above,
   wherein an upstream portion of the water supply pipe is disposed on a side of the heating unit, of the heat transfer member.
(8) The hydrogen production device according to (1) described above,
   wherein the cooling unit is a different heat transfer member configured to transfer heat of the reaction medium to the water vapor supply unit.
(9) The hydrogen production device according to (8) described above, further including
   a heat transfer member configured to transfer heat generated in the heating unit to the reaction medium,
   wherein the heat transfer member and the different heat transfer member are separated from each other with the reaction medium interposed between the heat transfer member and the different heat transfer member.
(10) The hydrogen production device according to (8) or (9) described above, further including
   a heat sink located between the different heat transfer member and the reaction medium, the heat sink having a coefficient of thermal conductivity lower than a coefficient of thermal conductivity of the different heat transfer member.
(11) The hydrogen production device according to (10) described above,
   wherein the heat sink is a porous body.
(12) The hydrogen production device according to (10) or (11) described above,
   wherein the heat sink includes a surface having unevenness.
(13) The hydrogen production device according to (1) described above,
   wherein the cooling unit is a movement mechanism configured to move the reaction medium inside the container.
(14) The hydrogen production device according to (13) described above,
   wherein the container includes a first region supplied with the heat from the heating unit and a second region supplied with the water vapor from the water vapor supply unit, and
   the movement mechanism moves the reaction medium between the first region and the second region.
(15) The hydrogen production device according to (14) described above, further including:
   a gate valve configured to isolate the first region and the second region from each other.
(16) The hydrogen production device according to (14) or (15) described above,
   wherein a heat storage member configured to store the heat supplied from the heating unit is disposed in the first region.
(17) The hydrogen production device according to any one of (14) to (16) described above,
   wherein a plurality of the reaction media are disposed in the container, and
   the movement mechanism alternately moves the plurality of the reaction media between the first region and the second region.
(18) The hydrogen production device according to any one of (14) to (17) described above,
   wherein the movement mechanism is a cart, and
   the cart is disposed on a rail.
(19) The hydrogen production device according to any one of (14) to (17) described above, wherein the movement mechanism is a rotating member configured to rotate inside the container.
(20) The hydrogen production device according to any one of (1) to (19) described above, wherein the heating unit is an industrial furnace.

### REFERENCE SIGNS

1 Hydrogen production device
10 Reaction medium
11 Container
1 1b First region
11c Second region
12 Industrial furnace (an example of a heating unit)
13 Heat transfer member
13A Transport pipe
14 Water vapor supply unit
14b Water supply pipe (an example of a cooling unit)
15 Recovery mechanism
16 Different heat transfer member (an example of a cooling unit)
17 Heat sink
18 Gate valve
19 Movement mechanism (an example of a cooling unit)
20 Heat storage member
21 Heat transfer member
22 Rail

## Claims

1. A hydrogen production device comprising:
a reaction medium;
a container configured to accommodate the reaction medium;
a heating unit configured to heat the reaction medium;
a water vapor supply unit configured to supply water vapor to the reaction medium; and
a cooling unit configured to cool the reaction medium.

2. The hydrogen production device according to claim 1, wherein
the cooling unit is a water supply pipe configured to supply raw material water to the water vapor supply unit, and
the water supply pipe is disposed in contact with the reaction medium.

3. The hydrogen production device according to claim 2, wherein
the water supply pipe is spirally wound around the reaction medium.

4. The hydrogen production device according to claim 3, further comprising:
a heat transfer member configured to transfer heat generated in the heating unit to the reaction medium, wherein
the heat transfer member is disposed between the water supply pipe spirally wound and the reaction medium.

5. The hydrogen production device according to claim 3, further comprising:
a heat transfer member configured to transfer heat generated in the heating unit to the reaction medium, wherein
the heat transfer member is spirally wound around the reaction medium.

6. The hydrogen production device according to claim 5, wherein
the water supply pipe and the heat transfer member are alternately spirally wound around the reaction medium.

7. The hydrogen production device according to any one of claims 4 to 6, wherein
an upstream portion of the water supply pipe is disposed on a side of the heating unit, of the heat transfer member.

8. The hydrogen production device according to claim 1, wherein
the cooling unit is a different heat transfer member configured to transfer heat of the reaction medium to the water vapor supply unit.

9. The hydrogen production device according to claim 8, further comprising:
a heat transfer member configured to transfer heat generated in the heating unit to the reaction medium, wherein
the heat transfer member and the different heat transfer member are separated from each other with the reaction medium interposed between the heat transfer member and the different heat transfer member.

10. The hydrogen production device according to claim 8 or 9, further comprising:
a heat sink located between the different heat transfer member and the reaction medium, the heat sink having a coefficient of thermal conductivity lower than a coefficient of thermal conductivity of the different heat transfer member.

11. The hydrogen production device according to claim 10, wherein
the heat sink is a porous body.

12. The hydrogen production device according to claim 10 or 11, wherein
the heat sink comprises a surface having unevenness.

13. The hydrogen production device according to claim 1, wherein
the cooling unit is a movement mechanism configured to move the reaction medium inside the container.

14. The hydrogen production device according to claim 13, wherein
the container comprises a first region supplied with the heat from the heating unit and a second region supplied with the water vapor from the water vapor supply unit, and
the movement mechanism moves the reaction medium between the first region and the second region.

15. The hydrogen production device according to claim 14, further comprising:
a gate valve configured to isolate the first region and the second region from each other.

16. The hydrogen production device according to claim 14 or 15, wherein
a heat storage member configured to store the heat supplied from the heating unit is disposed in the first region.

17. The hydrogen production device according to any one of claims 14 to 16, wherein
a plurality of the reaction media are disposed in the container, and
the movement mechanism alternately moves the plurality of the reaction media between the first region and the second region.

18. The hydrogen production device according to any one of claims 14 to 17, wherein
the movement mechanism is a cart, and
the cart is disposed on a rail.

19. The hydrogen production device according to any one of claims 14 to 17, wherein
the movement mechanism is a rotating member configured to rotate inside the container.

20. The hydrogen production device according to any one of claims 1 to 19, wherein
the heating unit is an industrial furnace.
